(19) Europäisches Patentamt
European Patent Office
Office européen des brevets

(11) Veröffentlichungsnummer: **0 024 012**
**B1**

(12) # EUROPÄISCHE PATENTSCHRIFT

(45) Veröffentlichungstag der Patentschrift: **04.07.84**

(51) Int. Cl.³: **F 15 D 1/00**, F 17 D 1/16, C 08 F 220/56

(21) Anmeldenummer: **80104489.2**

(22) Anmeldetag: **30.07.80**

(54) **Verfahren zur Verringerung des Reibungsverlustes strömender wässriger Flüssigkeiten und Suspensionen durch Zusatz eines Strömungsbeschleunigers.**

(30) Priorität: **04.08.79 DE 2931707**

(43) Veröffentlichungstag der Anmeldung:
**18.02.81 Patentblatt 81/7**

(45) Bekanntmachung des Hinweises auf die Patenterteilung:
**04.07.84 Patentblatt 84/27**

(84) Benannte Vertragsstaaten:
**BE DE FR GB IT NL**

(56) Entgegenhaltungen:
**EP - A - 0 003 821**
**GB - A - 1 451 706**
**US - A - 3 768 565**
**US - A - 4 115 339**

**CHEMICAL ABSTRACTS, Band 87, Nr. 2, 11. Juli 1977, Seite 125, Spalte 2, Nr. 8053m Columbus, Ohio, U.S.A.**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT**
**Postfach 80 03 20**
**D-6230 Frankfurt am Main 80 (DE)**

(72) Erfinder: **Wilski, Hans, Dr.**
**Händelstrasse 18**
**D-6232 Bad Soden am Taunus (DE)**
Erfinder: **Interthal, Werner, Dr.**
**Dr.-Ludwig-Opel-Strasse 62**
**D-6090 Rüsselsheim (DE)**
Erfinder: **Engelhardt, Friedrich, Dr.**
**Hünfelder Strasse 20**
**D-6000 Frankfurt am Main 61 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 024 012 B1

**Beschreibung**

Es ist allgemein bekannt, daß turbulent strömende Flüssigkeiten an den sie begrenzenden Wänden einen Reibungswiderstand erfahren. Es ist auch bekannt, daß man diesen Reibungswiderstand durch Zusatz geringer Mengen bestimmter Stoffe herabsetzen kann. Stoffe, die diese reibungswiderstandsvermindernde Wirkung zeigen, werden im englischen Sprachgebrauch als "drag reducing agents" bezeichnet. Im deutschsprachigen Raum wird für diese Stoffe die Bezeichnung "Strömungsbeschleuniger" verwendet (vgl. hierzu E. Dschagarowa und G. Mennig, Rheologica Acta 14, 1089 (1975) und die dort zitierte Literatur). Unter einem Strömungsbeschleuniger versteht man danach einen Stoff, der in geringer Menge einer turbulent oder pulsierend strömenden Flüssigkeit zugesetzt, diese Flüssigkeit — unter sonst gleichen Bedingungen — schneller strömen läßt. Strömungsbeschleuniger bewirken, daß man mit einer gegebenen Pumpe durch eine gegebene Rohrleitung mehr Flüssigkeit fördern kann.

In vielen Fällen ist allein schon diese Tatsache ein technischer Gewinn, wenn z.B. eine Rohrleitung im Normalbetrieb voll ausgelastet ist und zu bestimmten Zeiten ein Spitzenverbrauch zu fördern wäre. Da mit einer gegebenen Pumpenleistung bei der Verwendung von Strömungsbeschleunigern (im folgenden mit "SB" abgekürzt) mehr Flüssigkeit gefördert werden kann, wird auch in vielen Fällen die damit verbundene Energieeinsparung einen technischen Vorteil bringen. Schließlich kann man, wenn man die Durchsatzmenge nicht vergrößern will, bei Verwendung von SB den Druckverlust herabsetzen oder Rohre mit kleinerem Querschnitt verwenden. Beides sind Maßnahmen, die die Wirtschaftlichkeit im Betrieb einer Rohrleitung verbessern können.

Als Strömungsbeschleuniger bekannt sind verschiedene Verbindungen. An dieser Stelle erwähnt seien eine Reihe von hochmolekularen Verbindungen. So können z.B. Polyisobutylen (A. Ram, E. Finkelstein und C. Elata, I & EC Process Design and Development 6, Nr. 3, 309, 1967) oder verschiedene Polyacrylate und Polystyrolderivate (DE—AS 2 056 700) in flüssigen Kohlenwasserstoffen als Strömungsbeschleuniger eingesetzt werden. Als Strömungsbeschleuniger für Wasser wurde in der Literatur z.B. Polyäthylenoxid und darüberhinaus auch die Verwendung von Polyacrylamid beschrieben (BHRA Fluid Engineering ISBNO 900 983 71 x 1977, Seit B 3—37 bis B 3—50 und Journal of Applied Polymer Science, Vol. 18 (1974) Seiten 3403 bis 3421). Der Einsatz von Polyacrylamiden zur Verhinderung der Trennung und des Absetzens von wässrigen Suspensionen (Feststoff-Wasser-Gemischen) ist aus der US-Patentschrift 3 524 682 bekannt.

Bei Versuchen, die vorgenannten, oder auch andere in der Fachliteratur beschriebene Verbindungen, in technischem Maßstab als SB für wäßrige Flüssigkeiten oder Suspensionen einzusetzen, zeigt sich jedoch, daß allen diesen Verbindungen erhebliche Mängel anhaften. Zunächst scheiden naturgemäß für wäßrige Flüssigkeiten alle die Verbindungen als Strömungsbeschleuniger aus, die in Wasser nicht oder nicht genügend löslich sind, wie z.B. Polyisobutylen. Das oben erwähnte Polyäthylenoxid, das an sich gute strömungsbeschleunigende Wirkung zeigt, wird in turbulenten Strömungen, insbesondere wenn hohe Schergefälle auftreten (z.B. in Pumpen oder Düsen) rasch abgebaut und unwirksam gemacht. Dieses Polymere ist also nicht für einen Einsatz über längere Zeiträume oder bei höheren Schergefällen geeignet. Die bisher beschriebenen, nach konventionellen chemischen Methoden hergestellten Polyacrylamide sind zwar ebenfalls gute Strömungsbeschleuniger, doch läßt auch bei ihnen die Wirksamkeit und die Scherstabilität noch zu wünschen übrig, wie im einzelnen noch in den Beispielen gezeigt werden wird. Bereits seit 1954 ist es bekannt, daß man Acrylamid auch strahleninduziert polymerisieren kann (vgl. Schulz, Renner, Henglein, Kern; Macromol. Chem 12 (1954) 20). In neuerer Zeit wurde gezeigt, daß auch diese durch Strahlungspolymerisation erhaltenen Polyacrylamide als Strömungsbeschleuniger geeignet sind (DE—OS 27 49 302). Die hiernach bekannten Produkte sind jedoch in ihrer Wirkung als Strömungsbeschleuniger den gemäß der Erfindung als Strömungsbeschleuniger zu verwendenden Copolymerisaten unterlegen, wie das weiter unten angeführte Beispiel 18 zeigt.

Auch die in der US—A—4 115 339 beschriebenen Copolymere sind im wesentlichen wasserunlöslich und damit als Strömungsbeschleuniger nicht geeignet, da sie durch Ionisierungsstrahlung polymerisiert wurden.

Copolymerisate auf der Basis von Acrylamidopropansulfonsäure und 2-Acrylamido-2-methylpropansulfonsäure zur Verminderung des Reibungsverlustes von strömenden flüssigen Medien sind auch aus US—A—3 768 565, Chem. Abstr. 87, Nr. 8053 m und GB—A—1 451 706 bekannt. Die Polymerisation geschieht hier jedoch unter Rühren und man erhält dabei Produkte, die im Gegensatz zu den erfindungsgemäß zu verwendenden Copolymerisaten als hochviskose Massen anfallen und keine Rückprallelastizität aufweisen.

Überraschenderweise wurde nun gefunden, daß zum Unterschied von den bekannten, ggf. teilverseiften Polyacrylamiden, ganz bestimmte, ausgewählte Sulfonsäuregruppierungen enthaltende Copolymerisate des Acrylamids besondere Vorteile bei der Verwendung als Strömungsbeschleuniger in wäßrigem Medium zeigen. Bei diesen Sulfonsäuregruppen enthaltenden Copolymerisaten handelt es sich um Produkte, die bei ihrer Herstellung, ohne daß sie ihre Wasserlöslichkeit eingebüßt haben, als wäßrige, formstabile, schneidbare Gallerte anfallen. Es wurde gefunden, daß diese Produkte allen bisher bekannten Strömungsbeschleunigern sowohl in der Wirkung als auch in der Scherstabilität deutlich überlegen sind. Die Tatsache, daß diese Copolymerisate bei ihrer Herstellung als Gallerte anfallen, stellt ein wesentliches Merkmal dieser Produkte im Hinblick auf ihre Eignung als Strömungsbeschleuniger dar. Unter "Gallerte" soll hier und im Rahmen der vorliegenden Erfindung eine gummiähnliche Masse verstanden werden, die allgemein klar durchsichtig ist und die beim Liegen auf einer ebenen Fläche bei 20°C ihre Form nicht ändert. Die Gallerte fäuft also nicht auseinander wie es z.B. bei einer hochviskosen Lösung der Fall ist; die Gallerte läßt sich auch, im Gegensatz zu der hochviskosen Lösung, mit dem Messer schneiden; sie verhält sich ähnlich wie ein Guimmi.

Gegenstand der Erfindung ist somit ein Verfahren zur Verringerung des Reibungsverlustes von turbulent oder pulsierend strömenden wäßrigen Flüssigkeiten und Suspensionen durch Zusatz eines Strömungsbeschleunigers, das dadurch gekennzeichnet ist, daß man als Strömungsbeschleuniger 1 bis 1000 ppm eines linearen statistischen Copolymerisats der folgenden allgemeinen Formel

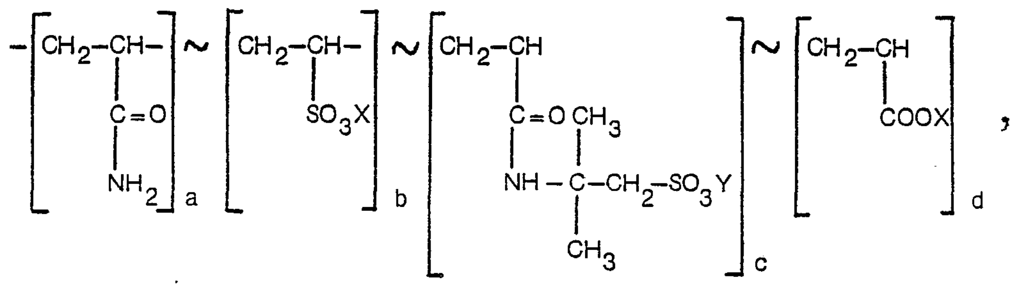

in der X ein Kation, $Na^+$, $K^+$ oder $NH_4$ und Y Wasserstoff oder ein Kation $Na^+$, $K^+$ oder $NH_4^+$ bedeuten und in der a, b, c und d die anteiligen Gewichtsverhältnisse der Comonomeren in % darstellen und a von 30 bis 98, b von 0 bis 20, c von 0 bis 25 und d von 0 bis 45 variieren, wobei jedoch die Summe der Anteile von b und c wenigstens 2 betragen muß, zusetzt, das bei der Herstellung unter gleichzeitiger Erhaltung der Wasserlöslichkeit als wäßrige, formstabile, schneidbare Gallerte anfällt und das, in 1 cm Schichtdicke auf eine Stahlplatte aufgetragen, beim Kugelfalltest mit einer Stahlkugel von 5 mm Durchmesser eine Rückprallelastizität von mehr als 5%, insbesondere von 25 bis 45%, aufweist.

Bei dem erfindungsgemäß zu verwendenden Copolymeren handelt es sich um ein Copolymer aus Acrylamid und wenigstens einem der Comonomere Vinylsulfonsäure und Acrylamido-2-methylpropansulfonsäure sowie gegebenenfalls Acrylsäure.

Der durch den Index d in der allgemeinen Formel I ausgedrückte Anteil an Acrylsäure bzw. Acrylat im Copolymeren kann entweder durch Einsatz von Acrylsäure als Comonomeres oder durch teilweise Verseifung der Säureamidgruppen des Acrylamids während der Polymerisation entstehen.

Die Erfindung betrifft insbesondere die Verwendung solcher Sulfonsäuregruppierungen enthaltend Acrylamidcopolymere als Strömungsbeschleuniger, die nach der Herstellung in Form einer Gallerte vorliegen, die in 1 cm Schichtdicke auf eine Stahlplatte aufgetragen, beim Kugelfalltest mit einer Stahlkugel von 5 mm Durchmesser eine Rückprallelastizität von größer als 5%, insbesondere von 25—45% aufweisen.

Die Herstellung der erfindungsgemäß zu verwendenden, als Gallerten anfallenden Copolymerisate erfolgt nach an sich bekannten Polymerisationsverfahren. Im allgemeinen werden zur Herstellung dieser Produkte etwa 15—40 Gew.-%ige, vorzugsweise 20 bis 30 Gew.-%ige wässrige Lösungen der Monomeren unter Zugabe geeigneter radikalbildender Substanzen sowie ggf., bei Herstellung teilverseifte Produkte, unter Zugabe von Alkalien, polymerisiert. Die Polymerisation erfolgt ohne Rühren bei einer Ausgangstemperatur von etwa 10 bis 30°C; im Verlaufe der Polymerisation steigt die Temperatur im Reaktionsgemisch auf etwa 60—95°C an. Nach Abschluß der Reaktion liegt eine Formstabile Gallerte vor, die, zweckmäßig nach Zerkleinerung, für die Verwendung als Strömungsbeschleuniger in Wasser gelöst wird. Zur Herstellung der erfindungsgemäß zu verwendenden Polymeren geeignete radikalbildende Katalysatoren sind vor allem Perverbindungen, welche unter den Reaktionsbedingungen in Radikale zerfallen und dadurch die Polymerisation auslösen. Solche Perverbindungen sind z.B. Peroxide wie Wasserstoffperoxid, Dibenzoylperoxid, tert. Butylhydroperoxid, Cumolhydroperoxid und Methyl-Äthylketonperoxid. Ebenso geeignet sind auch Peroxidisulfate wie z.B. Kalium-, Natrium und Ammoniumperoxidisulfat. Besonders geeignet als Katalysatoren sind Redoxsystheme, wie z.B. Peroxidisulfat/Pyrosulfat; Peroxidisulfat/Formaldehydsulfoxylat und Persulfat/Sulfinsäuren. Bevorzugt kommen zur Herstellung der erfindungsgemäß zu verwendenden Polymere die in der DE—OS 2 128 009 beschriebenen Initiatorsystheme zur Anwendung.

Durch Zusatz von Alkalien wie z.B. Natrium- oder Kaliumhydroxid, Natrium- oder Kaliumcarbonat und/oder unter Anwendung von erhöhtem Druck tritt bei der Polymerisation teilweise Verseifung der Säureamidgruppen zu Carbonsäuregruppen ein. Der gewünschte Verseifungsgrad der Säureamidgruppen kann vor allem durch die Menge des zugesetzten Aklalis gesteuert werden. Im einfachsten Fall erfolgt die Verseifung der Säureamidgruppen etwa im stöchiometrischen Verhältnis zum zugegebenen Alkali. Für die Verwendung als Strömungsbeschleuniger werden im allgemeinen die teilsweise verseiften Produkte oder die unter Einsatz von Acrylsäure als Comonomeres hergestellten Copolymerisate vorgezogen. Dabei wird meist ein Verseifungsgrad bis etwa 45 Gew.-%, vorzugsweise von 10—40 Gew.-%, bezogen auf das Gewicht des Copolymerisats eingehalten.

Ein weitere Charakterisierung der erfindungsgemäß zu verwendenden polymeren Gallerten kann am einfachsten durch ihre Rückprallelastizität erfolgen. Unter Rückprallelastizität versteht man beim Stoßversuch das Verhältnis von zurückgewonnener zu aufgewendeter Arbeit bzw. bei dem besonders einfach durchzuführenden Kugelfalltest das Verhältnis der Rückprallhöhe einer Stahlkugel zu ihrer Fallhöhe (vgl. hierzu K. Memmler, Handbuch der Kautschukwissenschaft 1930, S. 640 ff). Es wurde festgestellt, daß für die Verwendung als Strömungsbeschleuniger solche Sulfonsäuregruppen enthaltenden Copolymere der Formel I in Betracht kommen, die nach ihrer Herstellung in Form einer Gallerte vorliegen, die beim Kugelfalltest eine Rückprallelastizität von größer als 5%, insbesondere von 25 bis 45% aufweisen. Polyacrylamide oder Acrylamid-Copolymere des Handels, deren Polymerisation im allgemeinen in Suspension oder in nicht-wäßrigem Lösungsmittel erfolgt und die diese Gallertform mit der genannten charakteristischen Rückprallelastizität nicht aufweisen, haben, sich als Strömungsbeschleuniger nicht oder weniger gut geeignet erwiesen als die erfindungsgemäß zu verwendenden Produkte.

Zur Messung der Rückprallelastizität der polymeren Gallerte nach dem Kugelfalltest dient die in Figur 2 dargestellte Vorrichtung. Auf eine Stahlplatte 10 von 1 cm Dicke wird eine 1 cm dicke Scheibe des zu prüfenden Polymeren 11 gelegt und mit Talkum bepudert. Auf die bepuderte Oberfläche wird dann ein 100 cm langes Glasrohr 12 mit 2 cm Durchmesser gestellt und durch dieses eine Stahlkugel von 5 mm Durchmesser 13 auf die Gallertescheibe fallengelassen. Die Rückprallelastizität wird dann berechnet nach der Formel

$$R = \frac{H_r}{H_f}$$

in der $H_r$ die Rückprallhöhe und
$H_f$ die Fallhöhe bedeutet.

Bei der vorliegenden Anordnung ist $H_f = 100$ cm. Daher ist die Rückprallhöhe, in cm gemessen, gleich der Rückprallelastizität in %. Copolymere mit zu geringer Rückprallelastizität sind als Strömungsbeschleuniger weniger gut geeignet, so daß Copolymere mit relativ hoher Rückprallelastizität angestrebt werden, wobei allerdings Werte von mehr als etwa 70% im allgemeinen nicht überschritten werden.

Zur besseren Handhabung bei der Anwendung als Strömungsbeschleuniger kann man die bei der Polymerisationsreaktion anfallenden Gallerten in geeigneten Vorrichtungen zerkleinern. Die so erhaltenen Gelpartikeln lassen sich unmittelbar zur Herstellung von wässrigen Lösungen der Strömungsbeschleuniger verwenden; zur Verhinderung des Zusammenbackens der Gelpartikel können sie jedoch auch mit einer schleicht benetzbaren, in Wasser schwer oder unlöslichen oder quellbaren Substanz wie z.B. Maisstärke, Talkum oder Magnesiumoxid bepudert werden. Es ist weiterhin auch möglich, die bei der Polymerisationsreaktion anfallenden Gallerten durch Trocknen und anschließendes Mahlen zu Pulver zu verarbeiten. Die so vorbereiteten, Als Gelpartikel oder Pulver vorliegenden Copolymeren lassen sich leicht unter Rühren in Wasser zu einer Stammlösung lösen, die dann unmittelbar in die zur Verringerung des Reibungsdruckverlustes zu behandelnden wässrigen Medien eingegeben werden können.

Die erfindungsgemäß als Strömungsbeschleuniger verwendeten, Sulfonsäuregruppen enthaltenden Copolymeren der Formel I können der zu behandelnden strömenden wässrigen Flüssigkeit in Mengen von etwa 1 bis 1000 ppm zugegeben werden. Die anzuwendende Konzentration des Strömungsbeschleunigers hängt unter anderem vor allem von der Zusammensetzung der strömenden wässrigen Flüssigkeiten oder Suspensionen ab. Meist liegt die Anwendungskonzentration für die Strömungsbeschleuniger im Bereich von 10 bis 100 ppm. Neben der bevorzugten Zugabe der erfindungsgemäß zu verwendenden Strömungsbeschleuniger in Form einer möglichst konzentrierten wässrigen Stammlösung kann man die Copolymerisate auch in Form wässriger Suspension oder als trockene Pulver den zu behandelnden strömenden wässrigen Flüssigkeiten oder Suspensionen zuspeisen.

Bei den zu behandelnden wässrigen Flüssigkeiten oder Suspensionen kann es sich um reines Wasser, gff. auch Heißwasser, wäßrige Lösungen oder um Aufschlämmungen von wasserunlöslichen oder wasserschwerlöslichen Substanzen wie z.B. Sand, Ton oder Erzpartikeln in Wasser oder wäßrigen Lösungen handeln.

Es hat sich gezeigt, daß sich eine verleichenden Beurteilung der verschiedenen Strömungsbeschleuniger aufgrund der Angaben in der Literatur außerordentlich schwierig gestaltet, da die für diese Beurteilung maßgeblichen Werte für die strömungsbeschleunigende Wirkung und die Scherstabilität der geprüften Produkte ganz wesentlich von der Meßmethode und der bei der Messung benutzten Apparatur abhängen. Apparate, bei denen die Lösungen durch Kapillaren (Röhren von 0,2 bis 2 mm Durchmesser) strömen, liefern in der Regel besonders hohe Werte der Strömungsbeschleunigung. Da diese Ergebnisse aber wegen der Besonderheit der Kapillarströmung nicht ohne

weiteres in den technischen maßstab übertragbar sind, sollen diese hier außer Betracht bleiben. Aber auch bei größeren Apparaten sind die Meßwerte nicht direkt vergleichbar. Dies gilt ganz besonders für die Bestimmung der Scherstabilität. Für diese Größe gibt es noch kein objektiv definiertes technisches oder physikalisches Maß. Es ist aber bekannt, daß SB in einfachen Rohrströmungen verhältnismäßig wenig abgebaut werden. Der Hauptabbau erfolgt in den Pumpen. Bei einer Strömungsapparatur, bei der die SB-haltige Flüssigkeit im Kreislauf umgepumpt wird, ist der Abbau demgemäß wegen des häufigen Durchströmens der Pumpe viel größer als bei einer geraden Rohrleitung. Die Stärke des Abbaues hängt von der Pumpenkonstruktion ab. Aus allen diesen Betrachtungen folgt, daß man vergleichbare Zahlen nur dann erhält, wenn man die verschiedenen zu vergleichenden Produkte in ein und derselben Apparatur unter identischen Bedingungen untersucht. Damit die so gewonnenen Zahlen wenigstens annähernd auf technische Dimensionen übertragbar sind, muß die verwendete Strömungsapparatur eine gewisse Mindestgröße besitzen. Eine solche Apparatur ist im folgenden beschrieben:

Die zur Untersuchung von Strömungsbeschleunigern verwendete Apparatur ist in Figur 1 skizziert. Zur Prüfung wird die zu untersuchende Substanz im Behälter 1 unter Verwendung des Blattrührers 2 aufgelöst, wobei die Ventile 3 und 4 geschlossen bleiben. Nach erfolgter Auflösung werden beide Ventile geöffnet und die Lösung mit Hilfe der Pumpe 5 — in unserem Fall eine regelbare Mono-Pumpe 2NE80 von Netzsch — durch den Wärmetauscher 6 und den Durchflußmesser 7 wahlweise durch das Rohr A oder B geschickt. Nach einer gehörigen Einlaufstrecke wird der Druckabfall über eine Meßstrecke 8 von 1 m Länge mit dem Differenzdruckmanometer 9 bzw. 9a gemessen. Nach dem Passieren der Meßstrecke strömt die Flüssigkeit in den Behälter 1 zurück und setzt den Kreislauf fort.

Die Rohre A und B haben eine Länge von 6 m; der Innendurchmesser des Rohres A beträgt 1,4 cm und der des Rohres B, 3,0 cm.

Der Druckabfall an der Meßstrecke 8 ist ein besonders einfaches Maß, um die Wirksamkeit eines Strömungsbeschelunigers zu beurteilen. Um von den speziellen Dimensionen der Apparatur frei zu werden, wählt man als Maß für die Wirksamkeit eines SB das Verhältnis m des Druckverlustes, der sich mit reinem Wasser einstellt und dem, der mit einer SB-Lösung erzielt wird, also

$$m = \frac{\Delta P_w}{\Delta P_{SB}}$$

$\Delta P_w$ = Druckverlust mit reinem Wasser
$\Delta P_{SB}$ = Druckverlust mit SB-Lösung

Je besser der Strömungsbeschleuniger, um so größer ist das Druckverlustverhältnis m.

Die Scherstabilität eines Strömungsbeschleunigers, d.h. seine Widerstandsfähigkeit gegen den Abbau in hohen Schergefällen (wie sie vor allem in Pumpen auftreten) prüft man einfach dadurch, daß man die SB-Lösung lange Zeit in der Strömungsapparatur umpumpt. Die Zeit, die erforderlich ist, um das anfängliche Druckverlustverhältnis auf einen bestimmten Wert (z.B. 50% oder 10% des Anfangswertes) zu erniedrigen, ist ein direktes (relatives) Maß für die Scherstabilität.

Beispiel 1

In einem mit Polyäthylen ausgekleideten Reaktionsgefäß wurden 750 $cm^3$ vollentsalztes Wasser vorgelegt und dann unter Rühren 247,5 g Acrylamid, 66,6 g Kaliumcarbonat, 10 g vinylsulfonsaures Natrium, 25%ig, 0,5 g Dibutylaminhydrochlorid, 0,25 g Ammoniumperoxidisulfat und 0,25 g einer Verbindung der Formel

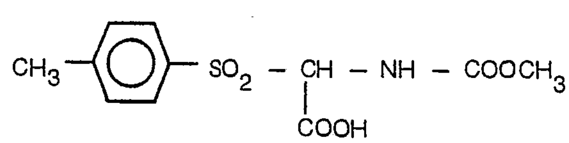

gelöst. Nach Verdrängen des Luftsauerstoffs durch Einleiten von Stickstoff polymerisiert das Reaktionsgemisch. Bei einer Ausgangstemperatur von 20°C steigt die Temperatur im Verlauf einer Stunde auf 80 bis 85°C. Eine mechanische Durchmischung erfolgt nicht. Das danach erhaltene Copolymerisat stellt eine formstabile, schneidbare, gummielastische Gallerte dar. Die Rückprallelastizität, in der vorher beschriebenen Weise gemessen, beträgt 35%, der Verseifungsgrad, ermittelt durch titrimetrische Bestimmung der Carboxylgruppen, beträgt 27 Gewichtsprozent (bezogen auf das Gewicht des Copolymerisats). Die Gallerte (Copolymeres I) ist in Wasser rückstandfrei löslich.

Die strömungsbeschleunigende Wirkung, gemessen in der vorher beschriebenen Apparatur, ausgedrückt durch das vorher erläuterte Druckverlustverhältnis, ist in Figur 3, Kurve a in Abhängigkeit von der Konzentration dargestellt. Die Meßwerte wurden unmittelbar nach Einschalten der Apparatur *

---

* mit Rohr A (1,4 cm Durchmesser) und einer Reynoldszahl Re = 100.000

erhalten, zum Zeitpunkt t = o, zu dem noch kein Abbau eingetreten war. Mit steigender Konzentrationen der SB von 0 bis 17 ppm (= Gramm SB pro $m^3$ Wasser) nimmt die Wirkung zu. Oberhalb einer Konzentration von 17 ppm war keine weitere Verbesserung zu erreichen. Der Endwert bei 17 ppm beträgt m = 5, d.h. der Druckverlust bei Einsatz des SB ist nur noch 1/5 des Druckverlustes der reinen Wassers.

Zum Vergleich ist die Wirkung eines als guter SB beurteilten, unter der Bezeichnung "Separan® AP 273" im Handel erhältlichen Polyacrylamids (Produkt A) (vgl. BHRA Fluid Engineering ISBNO 900 983 71X 1977, Seite B3—37 bis B3—50, besonders Seite B3—39, Absatz 5) gestrichelt als Kurve b in Figur 3 mit eingezeichnet. Dieses als Pulver vorliegende anionische Polyacrylamid, dessen Herstellung durch Polymerisation einer verdünnten Lösung erfolgt, erreicht erst bei einer Konzentration von 34 ppm seine volle Wirksamkeit. Von dem erfindungsgemäß zu verwendenden Copolymeren I wird also nur die halbe Menge benötigt, um die gleiche Wirkung zu erzielen.

Kurve c in Figur 3 zeigt schließlich die Wirkung eines anderen unter der Bezeichnung "Bozefloc® A 41" im Handel erhältlichen Polyacrylamids (Produkt B), (vgl. hierzu die Firmenschrift: "Merkblatt A Nr. 8601 — Bozefloc — der Benckiser Knapsack GmbH, Ladenburg) mit noch geringerer Wirksamkeit.

Die geringe erforderlich Anwendungskonzentration der erfindungsgemäß anwendbaren Copolymeren ist nicht ihr einziger Vorteil. Überraschenderweise zeigen diese Produkte auch eine bisher völlig unbekannte Scherstabilität. Figur 4 veranschaulicht die Ergebnisse eines Abbau-Versuches, bei dem wäßrige Lösungen der Konzentration 60 ppm in der vorher beschriebenen Apparatur längere Zeit umgepumpt wurden. Die Konzentration von 60 ppm wurde gewählt, da bei dieser Konzentration auch die zum Vergleich Herangezogenen SB ihre maximal Wirkung entfalten. Der Versuch wurde mit Rohr A (1,4 cm Durchmesser) und einer Reynoldszahl Re = 100 000 durchgeführt. Nach einer Umpumpzeit von 400 Minuten ist die Wirkung der erfindungsgemäß verwendeten Copolymeren I noch völlig unverändert (Kurve d), währen andere, zum Vergleich herangezogene Polymere weitgehend abgebaut sind (Kurve e = Produkt A; Kurve f = Polyäthylenoxid (Product C) gem. Journal of Applied Polymer Science Vol 18 (1974) S.3403—3421, bes. S. 3406 letzter Abs. und S. 3408 Tabelle 1). Die folgende Tabelle 1 veranschaulicht diese Ergebnisse noch einmal:

TABELLE 1

| Polymer, zu 60 ppm in Wasser gelöst | $\Delta P_W/\Delta P_{SB}$ Zu Versuchsbeginn | Nach 400 Minuten |
|---|---|---|
| Über Gelstufe hergestellt (Copolymeres I) | 5,0 | 5,0 |
| Handelsübliches Polyacrylamid (Produkt A) | 5,0 | 2,3 |
| Handelsübliches Polyäthylenoxid (Produkt C) | 4,4 | 1,2 |

Es soll nicht unerwähnt bleiben, daß es eine Reihe von Strömungsbeschleunigern mit sehr geringer Wirkung, aber verhältnismäßig guter Scherstabilität gibt. Die verhältnismäßig gute Scherstabilität dieser Produkte bringt aber keinen technischen Nutzen, da die Absolutewerte der zu erreichenden Strömungsbeschleunigung zu gering sind. Als typisches Beispiel hierfür ist in Figur 4 das Verhalten einer Carboxymethylcellulose (Produkt D) als Kurve g eingezeichnet. Die verwendete Carboxymethylcellulose besitzt, als 2%ige wäßrige Lösung in Kugelfall-Viskosimeter nach Höppler gemessen, eine Viskosität von 3000 Pa·s.

In diesem Fall beträgt m zu Versuchsbeginn 1,25 und nach 400 Minuten 1,14. Hierbei ist zu beachten, daß der Wert m = 1 völlige Unwirksamkeit bedeutet. Strömungsbeschleuniger mit guter Wirkung (z.B. m = 5) und gleichzeitig guter Scherstabilität sind bisher noch nicht bekannt geworden.

Beispiel 2

Das nach Beispiel 1 hergestellte Copolymere I und die Produkte A und C wurden in der vorher beschriebenen Strömungsapparatur geprüft und zwar derart, daß die Meßwerte mit Rohr A bei einer Reynoldszahl Re = 100.000 erst nach einer halben Stunde Umpumpdauer abgelesen wurden. Innerhalb dieser halben Stunde ist bei den Produkten A und C bereits ein gewisser Abbau eingetreten. Nach dieser Zeit zeigt das erfindungsgemäß anwendbare Copolymere I (Kurve h in Figur 5) bei 40 ppm seine volle Wirksamkeit von $\Delta P_W/\Delta P_{SB} = 5$, während handelsübliches Polyacrylamid (Produkt A) erst bei 80 ppm diese Wirkung erreicht (Kurve j). Polyäthylenoxid (Produkt C) erreicht selbst bei 100 ppm kaum den Wert $\Delta P_W/\Delta P_{SB} = 2{,}5$ (Kurve k).

Beispiele 3—17

Die Herstellung der in diesen Beispielen als Strömungsbeschleuniger geprüften Copolymerisate erfolgte analog den Angaben in Beispiel 1. Die Zusammensetzung der Copolymerisate ist der folgenden Tabelle 2 zu entnehmen.

In der Tabelle bedeuten

AAM — Acrylamid

VSSNa — Vinylsulfonsäure-Natriumsalz

AMPS — Acrylamido-2-methylpropansulfonsäure

X — Kation des Acrylats bzw. der Acrylsäure

Y — Kation der AMPS

Die strömungsbeschleunigende Wirkung der Produkte, gemessen in der vorher beschriebenen Apparatur, wird in der letzten Spalte der Tabelle 2 durch das bereits erwähnte Druckverhältnis $\Delta P_W/\Delta P_{SB} = m$ ausgedrückt. Die Messungen erfolgten mit Rohr A (Durchmesser 1,4 cm) bei einer Reynoldszahl von Re = 100.000 und einer Konzentration der Copolymeren von 17 ppm in Wasser unmittelbar nach Einschalten der Apparatur.

TABELLE 2

| Beispiel Nr. | AAM (Gew.%) | X-Acrylat (Gew.-%) | X | VSS Na (Gew.-%) | AMPS (Gew.-%) | Y | m |
|---|---|---|---|---|---|---|---|
| 3 | 73 | 25 | Na | 2 | — | | 5,0 |
| 4 | 73 | 25 | K | 2 | — | | 5,0 |
| 5 | 83 | 12 | K | 5 | — | | 5,0 |
| 6 | 70 | 25 | Na | 5 | — | | 5,0 |
| 7 | 60 | 25 | K | 15 | — | | 4,0 |
| 8 | 90 | — | | 10 | — | | 4,5 |
| 9 | 95 | — | | — | 5 | H | 5,0 |
| 10 | 90 | 5 | K | — | 5 | K | 5,0 |
| 11 | 90 | — | | — | 10 | Na | 5,0 |
| 12 | 90 | — | | — | 10 | $NH_4$ | 5,0 |
| 13 | 80 | — | | — | 20 | Na | 4,0 |
| 14 | 75 | 5 | K | — | 20 | K | 4,0 |
| 15 | 48 | 45 | K | 2 | — | | 5,0 |
| 16 | 60 | — | | 20 | 20 | $NH_4$ | 3,8 |
| 17 | 60 | 30 | Na | 5 | 5 | Na | 5,0 |

Beispiel 18

Die Strömungsbeschleuniger gemäß der Erfindung wurden mit zwei durch Strahlenpolymerisation hergestellten Polyacrylamiden verglichen, die in der DE—A—2 749 302 als besonders geeignete Strömungsbeschleuniger empfohlen werden. Das eine dieser durch Strahlenpolymerisation hergestellten Produkte, das in Tabelle I, auf Seite 19 der DE—A—2 749 302 als "Polymer B" beschrieben ist, wird nachfolgend als — Produkt D — bezeichnet; das zweite, im folgenden — Produkt E

— genannt, ist im Beispiel 3 auf Seite 22 der DE—A—2 749 302 im Versuch 5 charakterisiert. Alle Produkte wurden bei einer Konzentration von 17 ppm in Wasser in der vorher beschriebenen Strömungsapparatur mit Rohr A (Durchmesser 1,4 cm) bei einer Reynoldszahl von 100.000 geprüft. Die Messungen wurden unmittelbar nach Einschalten der Apparatur vorgenommen. Die bei den Untersuchungen erhaltenen Ergebnisse, die in der nachfolgenden Tabelle 3 zusammengestellt sind, zeigen die deutlich überlegenen Eigenschaften der Strömungsbeschleuniger gemäß der Erfindung.

TABELLE 3

| Produkt | m |
|---|---|
| Copolymerisat nach Beispiel 3 | 5,0 |
| Copolymerisat nach Beispiel 17 | 5,0 |
| Produkt D (durch Strahlenpolymerisation hergestelltes Vergleichsprodukt) | 3,1 |
| Produkt E (durch Strahlenpolymerisation hergestelltes Vergleichsprodukt) | 2,7 |

**Patentansprüche**

1. Verfahren zur Verringerung des Reibungsverlustes von turbulent oder pulsierend strömenden wäßrigen Flüssigkeiten und Suspensionen durch Zusatz eines Strömungsbeschleunigers, dadurch gekennzeichnet, daß man als Strömungsbeschleuniger 1 bis 1000 ppm eines linearen statistischen Copolymerisats der folgenden allgemeinen Formel

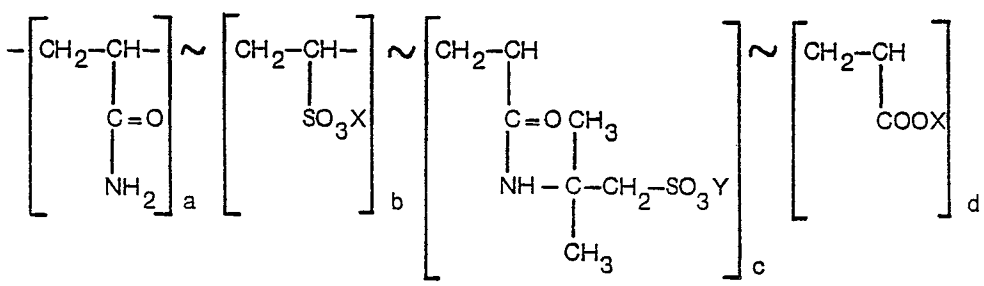

in der X ein Kation, $Na^+$, $K^+$ oder $NH_4$ und Y Wasserstoff oder ein Kation $Na^+$, $K^+$ oder $NH_4^+$ bedeuten und in der a, b, c und d die anteiligen Gewichtsverhältnisse der Comonomeren in % darstellen und a von 30 bis 98, b von 0 bis 20, c von 0 bis 25 und d von 0 bis 45 variieren, wobei jedoch die Summe der Anteile von b und c wenigstens 2 betragen muß, zusetzt, das bei der Herstellung unter gleichzeitiger Erhaltung der Wasserlöslichkeit als wäßrige, formstabile, schneidbare Gallerte anfällt und das, in 1 cm Schichtdicke auf eine Stahlplatte aufgetragen, beim Kugelfalltest mit einer Stahlkugel von 5 mm Durchmesser eine Rückprallelastizität von mehr als 5%, insbesondere von 25 bis 45%, aufweist.

2. Verfahren nach Anspruch 1, dadurch gekennzeichnet, daß man also Strömungsbeschleuniger Copolymerisate der allgemeinen Formel I aus Acrylamid und wenigstens einem der Comonomeren Vinylsulfonsäure und Acrylamido-2-methylpropansulfonsäure einsetzt, wobei ein Teil des Acrylamids bis zu einem Verseifungsgrad von 45 Gew.-%, bezogen auf das Gewicht des Copolymerisats, verseift sein kann.

3. Verfahren nach Ansprüchen 1 bis 3, dadurch gekennzeichnet, daß man als Strömungsbeschleuniger Copolymere der allgemeinen Formel I verwendet, welche durch Polymerisation aus 15 bis 40 Gew.-%igen Lösungen der Monomeren in Gegenwart radikalbildender Substanzen ohne Rühren erhalten wurden.

**Revendications**

1. Procédé pour réduire la perte de charge par frottement de liquides et de suspensions aqueux s'écoulant en régime turbulent ou pulsatoire par addition d'un accélérateur d'écoulement, caractérisé en ce qu'on ajoute comme accélérateur d'écoulement 1 à 1000 ppm d'un copolymère statistique linéaire répondant à la formule générale suivante:

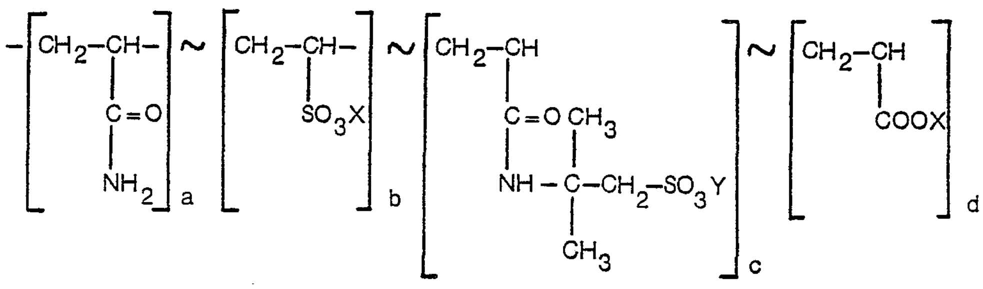

dans laquelle X désigne un cation $Na^+$, $K^+$ ou $NH_4$ et Y l'hydrogène ou un cation $Na^+$, $K^+$ ou $NH_4^+$ et dans laquelle a, b, c et d représentent les rapports pondéraux partiels des comonomères en % et a varie de 30 à 98, b de 0 à 20, c de 0 à 25 et d de 0 à 45, la somme des fractions de b et c devant être d'au moins 2, qui se présente lors de la préparation sous la forme d'une gélatine aqueuse, de forme stable sécable avec conservation simultanée de la solubilité dans l'eau et qui, déposé sur une plaque d'acier sous une épaisseur de couche de 1 cm, présente à l'essai à la chute de bille avec un bille d'acier de 5 mm de diamètre, une élasticité de rebondissement de plus de 5%, en particulier de 25 à 45%.

2. Procédé suivant la revendication 1, caractérisé en ce qu'on utilise comme accélérateurs d'écoulement des copolymeres répondant à la formule générale I de l'acrylamide et d'au moins l'acide vinylsulfonique et l'acide acrylamido-2-méthylpropanesulfonique comme comonomères, une partie de l'acrylamide pouvant être saponifiée jusqu'à un degré de saponification de 45% en poids, par rapport au poids du copolymère.

3. Procédé suivant l'une quelconque des revendications 1 à 3, caractérisé en ce qu'on utilise comme accélérateurs d'écoulement des copolymères répondant à la formule générale I, qui sont obtenus par polymérisation à partir de solutions des monomères à 15—40% en poids, en présence de substances formant des radicaux, sans agitation.

## Claims

1. Process for reducing the friction pressure drop of aqueous liquids and suspensions in turbulent or pulsating flow by a drag reducing agent, which process is characterized by adding as drag reducing agent from 1 to 1000 ppm of a linear random copolymer of the following general formula I

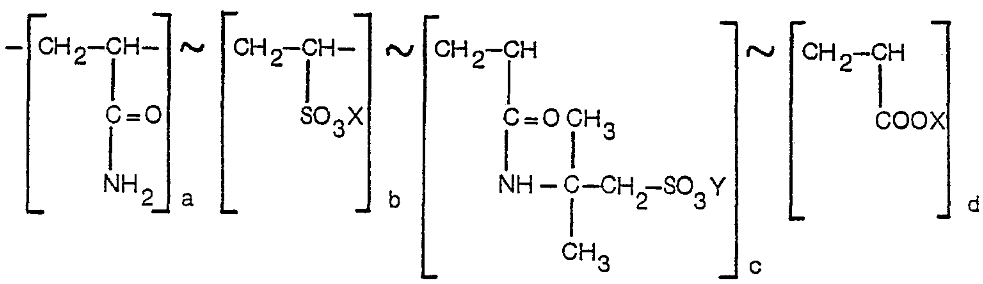

in which X is a $Na^+$, $K^+$ or $NH^+_4$ cation and Y is hydrogen or a $Na^+$, $K^+$ or $NH^+_4$ cation, and in which a, b, c and d represent the proportional weight ratios of the comonomers in % and a is in the range of from 30 to 98, b from 0 to 20, c from 0 to 25 and d from 0 to 45, however, wherein the sum of the portions of b and c must be at least 2, the said copolymer being obtained in the manufacturing process in the form of aqueous and dimensionally stable jellies capable of being cut, while retaining their solubility in water and which, when spread on a steel plate with a layer thickness of 1 cm, shows an elastic resilience of more than 5%, especially of 25 to 45% in the falling ball test using a steel ball having a diameter of 5 mm.

2. Process as claimed in claim 1, which is characterized by using as drag reducing agents copolymers of the general formula I of acrylamide and at least one of the comonomers vinylsulfonic acid and acrylamido-2-methyl-propanesulfonic acid, wherein part of the acrylamide may be saponified up to a saponification degree of 45% by weight, calculated on the weight of the copolymer.

3. Process as claimed in claims 1 to 2, which is characterized by using as drag reducing agents copolymers of formula I, which were obtained by polymerization from 15 to 40% by weight solutions of the monomers in the presence of radical-forming substances without stirring.

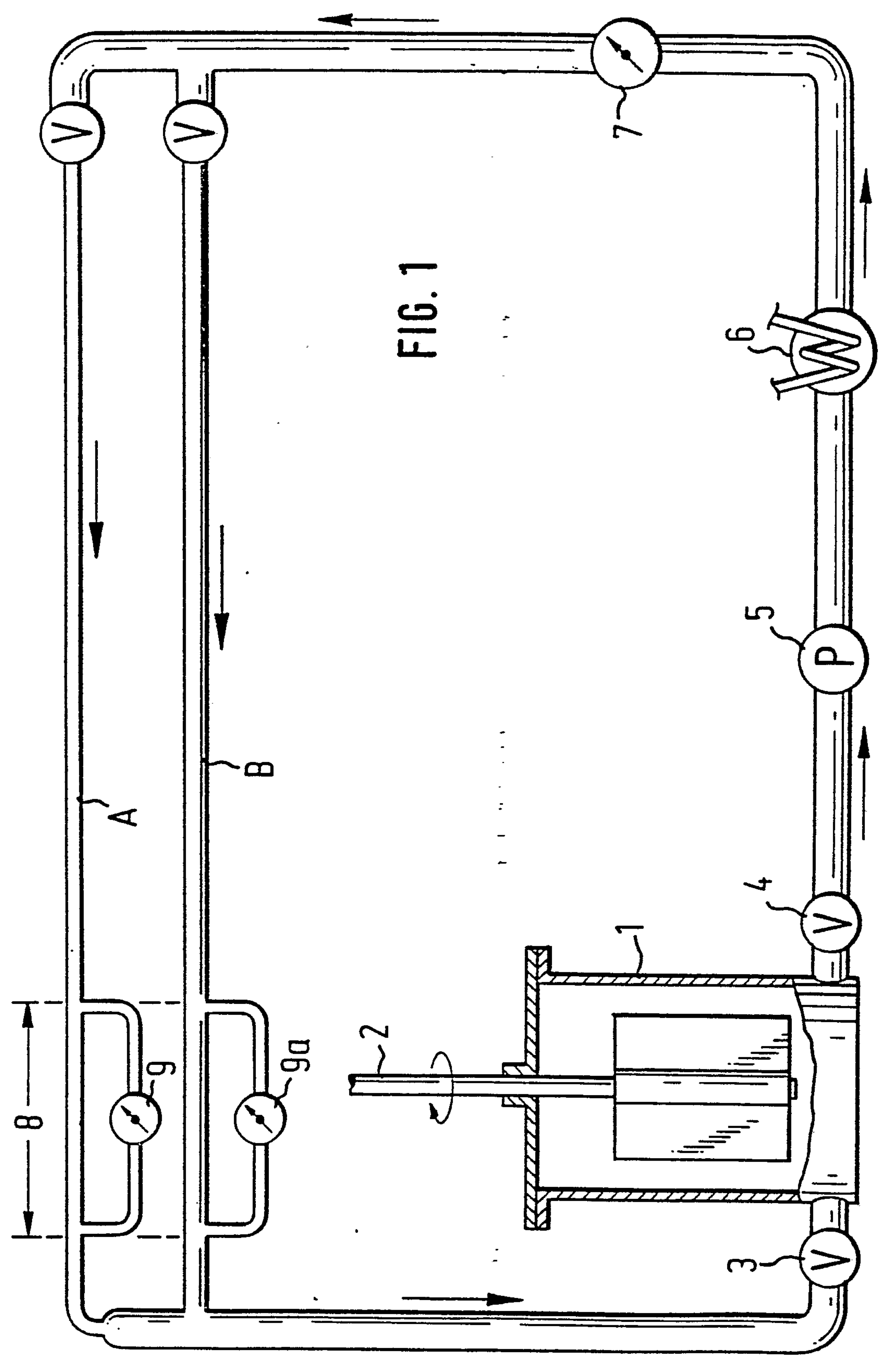


FIG. 1

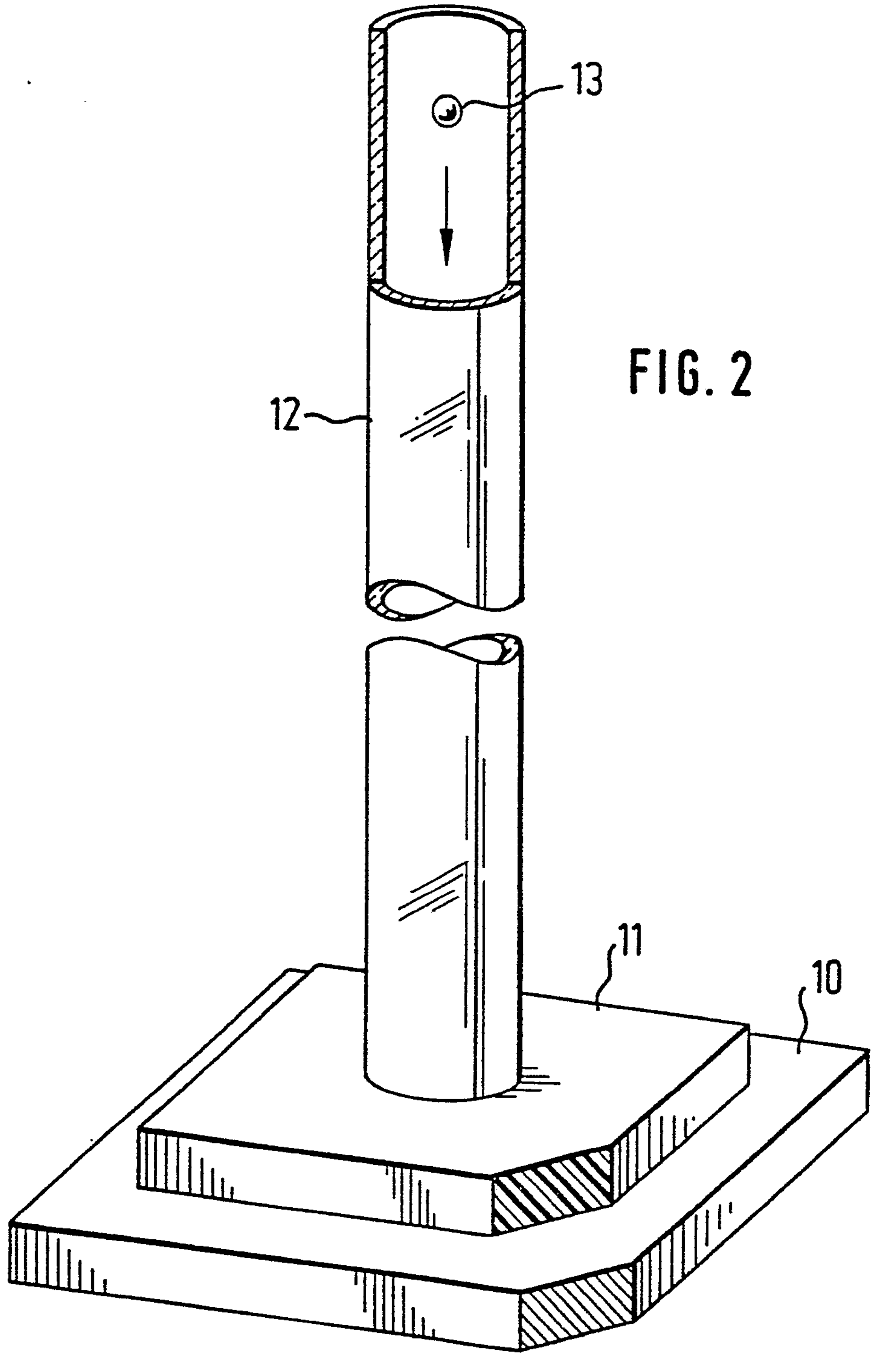


FIG. 2

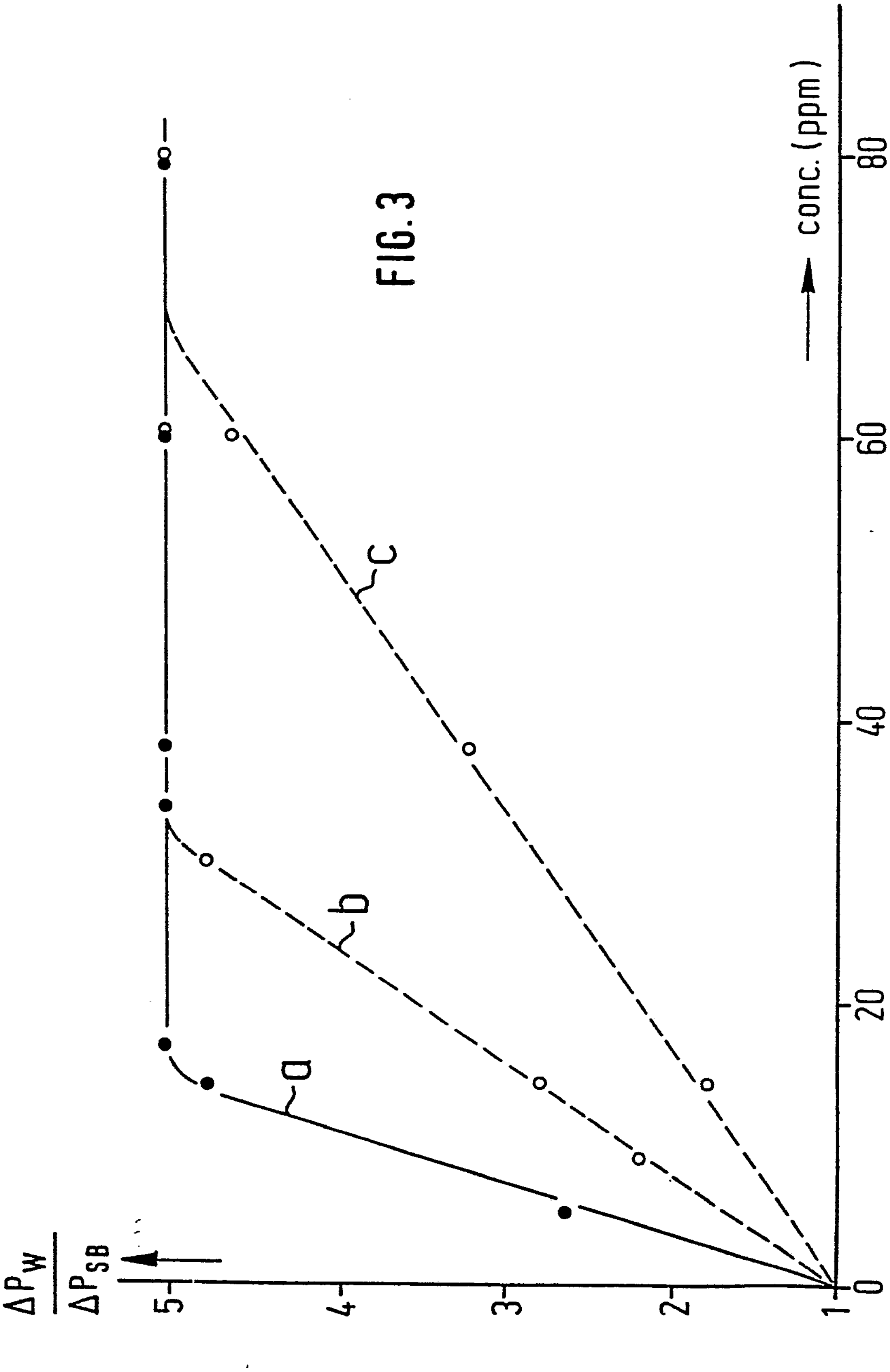


FIG. 3

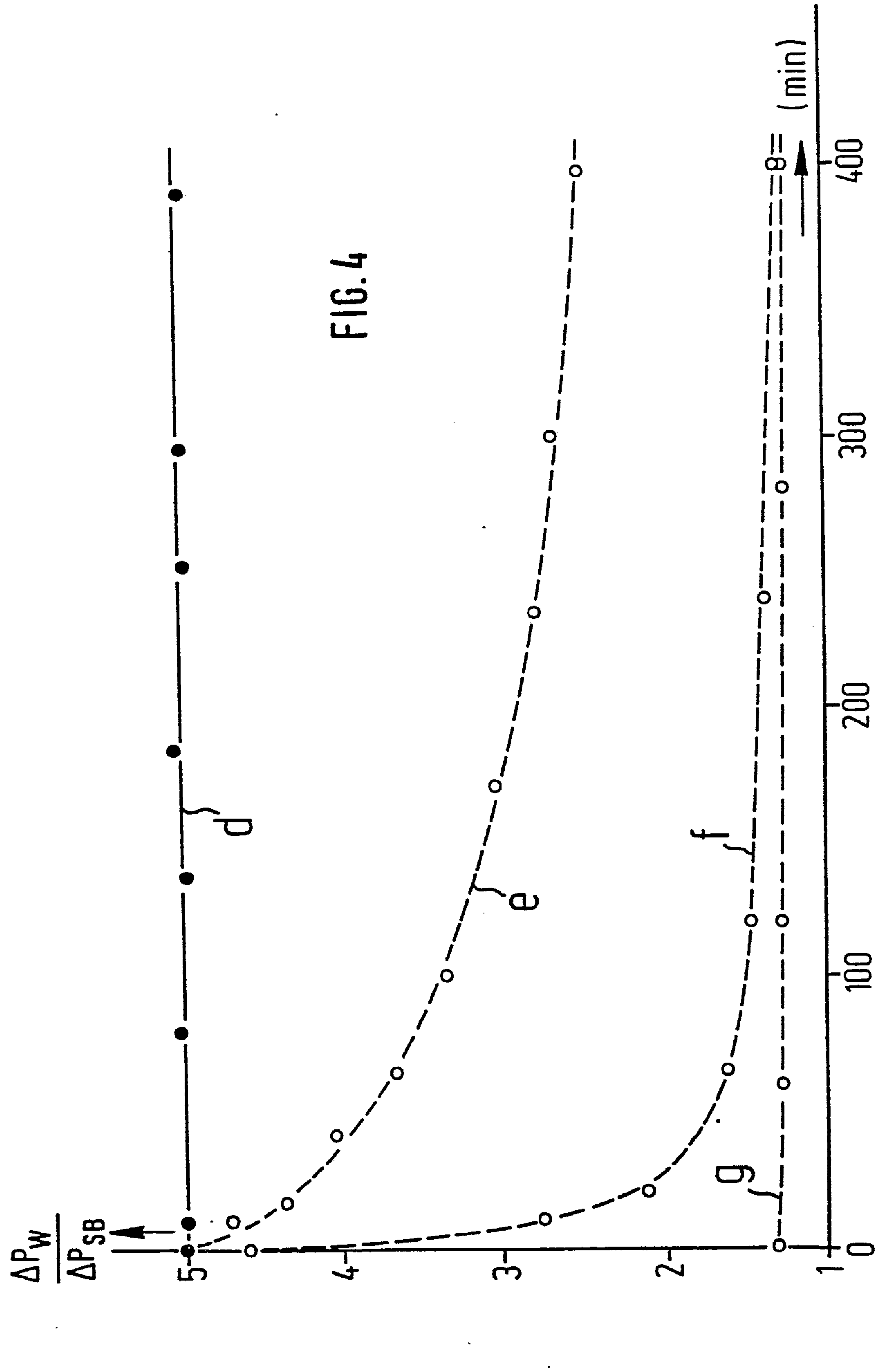


FIG. 4

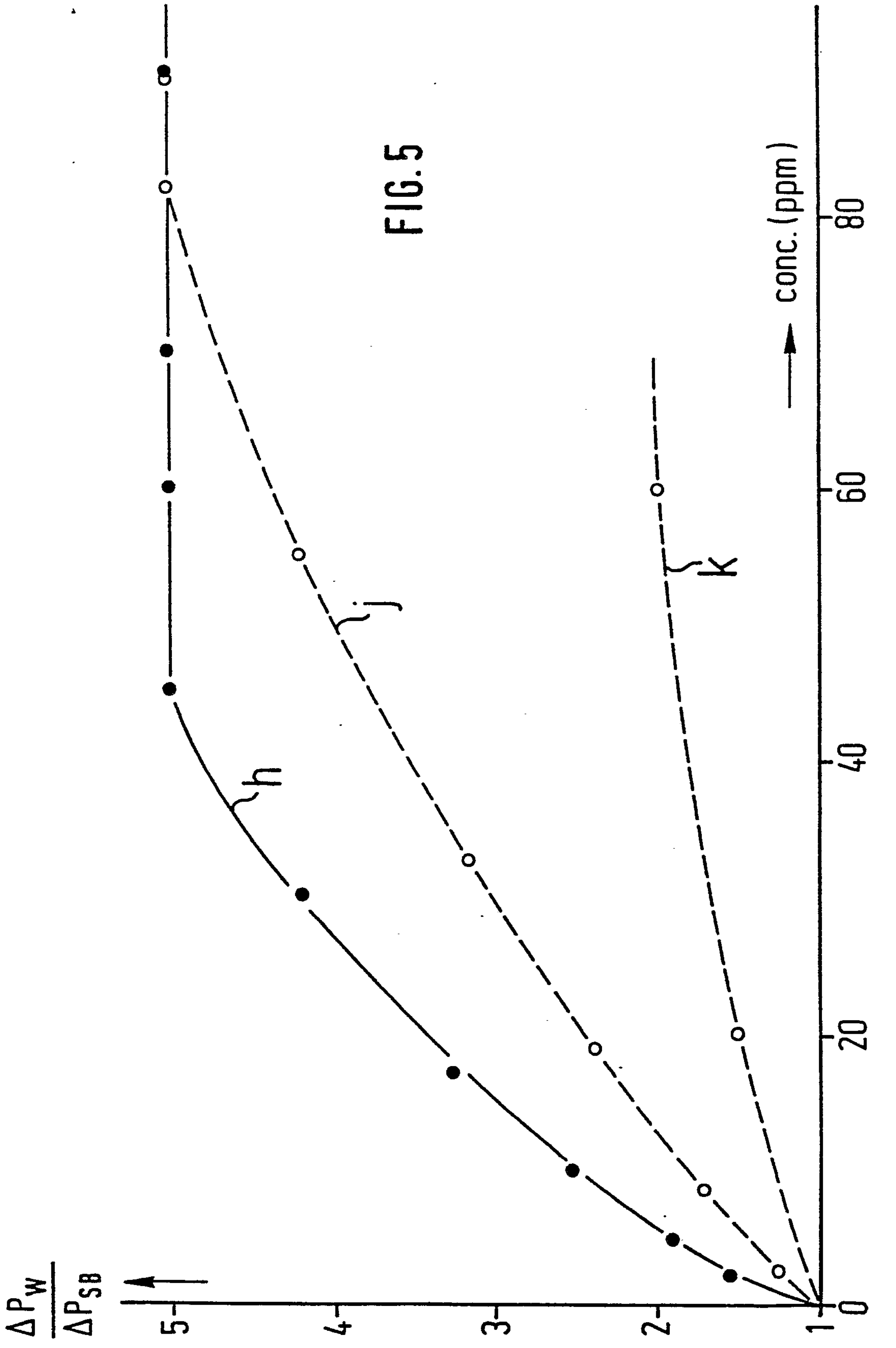


FIG. 5